# EUROPEAN PATENT APPLICATION

(11) **EP 4 354 349 A1**
(43) Date of publication of application: **17.04.2024**
(21) Application number: 23184672.6
(22) Date of filing: 11.07.2023
(51) Int. Cl.: G06N 3/063, G06N 3/0464, G06N 3/084

(54) **HALO TRANSFER FOR CONVOLUTION WORKLOAD PARTITION**

(30) Priority: 13.10.2022 US 202218046256
(71) Applicant: INTEL Corporation, Santa Clara, CA 95054 (US)
(72) Inventor: GRYMEL, Martin-Thomas, Leixlip, Kildare, W23 VP97 (IE); BERNARD, David Thomas, Kilcullen, R56E160 (IE); HANRAHAN, Niall, Galway, H91 N6K7 (IE)
(74) Representative: Maiwald GmbH

(57) **Abstract**

A DNN accelerator includes multiple compute tiles for sharing a workload of running a convolution. A halo pipeline in a compute tile can facilitate replications of halo data from the compute tile where the halo data is generated into another compute tile. The halo pipeline may receive a memory transaction for writing a data block. The halo pipeline may determine that the data block falls into a halo region in an input tensor of the convolution. The halo pipeline may generate a remote address for storing the data block in a memory of the other compute tile, e.g., based on a local address of the data block in a memory of the compute tile. The halo pipeline may adjust the remote address, e.g., based on a difference in dimensions of a tensor to be used by the compute tile and a tensor to be used by the other compute tile.

## Description

### Technical Field

This disclosure relates generally to neural networks, and more specifically, halo transfer for convolution workload partition.

### Background

Deep neural networks (DNNs) are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as each inference can require hundreds of millions of MAC (multiply-accumulate) operations as well as a large amount of data to read and write. Therefore, techniques to improve efficiency of DNNs are needed.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example DNN, in accordance with various embodiments.
FIG. 2 illustrates an example convolution, in accordance with various embodiments.
FIG. 3 illustration partition of a workload of a convolution, in accordance with various embodiments.
FIG. 4A illustrates tensors generated from convolution workload partition, in accordance with various embodiments.
FIG. 4B shows a memory layout for a tensor in FIG. 4A, in accordance with various embodiments.
FIG. 5 is a block diagram of a compute tile, in accordance with various embodiments.
FIG. 6 is a block diagram of a halo pipeline, in accordance with various embodiments.
FIG. 7 illustrates an address translation module, in accordance with various embodiments.
FIG. 8 illustrates reshaping a memory layout of halo data, in accordance with various embodiments.
FIG. 9 illustrates partition of a memory transaction, in accordance with various embodiments.
FIG. 10 illustrates an example MAC array, in accordance with various embodiments.
FIG. 11 is a flowchart showing a method of deep learning, in accordance with various embodiments.
FIG. 12 illustrates a deep learning environment, in accordance with various embodiments.
FIG. 13 is a block diagram of an example DNN system, in accordance with various embodiments.
FIG. 14 is a block diagram of an example computing device, in accordance with various embodiments.

### Detailed Description

### Overview

The last decade has witnessed a rapid rise in Al (artificial intelligence) based data processing, particularly based on DNN. DNNs are widely used in the domains of computer vision, speech recognition, image, and video processing mainly due to their ability to achieve beyond human-level accuracy. The significant improvements in DNN model size and accuracy coupled with the rapid increase in computing power of execution platforms have led to the adoption of DNN applications even within resource constrained mobile and edge devices that have limited energy availability. Thus, it is essential to provide means for the fast and timely execution of these DNNs.

DNN accelerator hardware is typically composed of several compute cores which allows for a very flexible workload deployment. Different compute cores may work on independent workloads that belong to distinct threads, or they may collaborate on a single thread where a big workload has been split into smaller sub-workloads that are processed by different compute cores in parallel. The individual results are then combined to an overall single result.

If a workload is split across multiple compute cores, the challenge can be to determine what the best divide of the workload is, as there may be various ways to achieve this. This task usually falls to the compiler to make the decision about the most efficient workload splitting based on a cost model. The ways in which workloads can be split is determined also by the hardware capabilities offered. Not all schemes to split a workload can be used on every hardware platform as the features may be different. Thus, the hardware platform that offers most flexibility in terms of workload splitting features may also be able to process some workloads faster than other platforms, and ultimately have an edge over the competition in the fiercely fought over market.

When a DNN workload is split across its width, height and or depth, it may be that the next layer operation in the DNN requires data from compute tiles that worked on adjacent tensor pieces or from all compute tiles. For splits across the width and the height, this is usually the case if the following convolution operations uses a non-trivial kernel size, i.e., a kernel size that is larger than 1x1. If a workload is split across its depth, subsequent operations typically require access to all the computed tensor pieces. One solution to this problem is for every compute tile requiring some data from other tiles to request it, if possible.

Another solution is to let the compute tile, which generates data needed by another compute tile, replicate the data into the other compute tile. The data may be referred to as halo data. This solution can be more advantageous. For instance, the DNN accelerator can have higher performance due to reduced inter-tile traffic. The halo data can be written once into the compute tile requiring it, replacing many inter-tile reads that might take place otherwise. Also, the compute can be faster as halo data can be replicated as soon as it is generated. Further, write interfaces are simpler than read interfaces in terms of hardware resources, resulting in less inter-engine wiring and less logic complexity. There is also a speed advantage as data flows one way, and the need to request data is eliminated. Simpler hardware interfaces and less transactions can lead to higher power savings. This solution can also take advantage of write mechanisms that allow the use of multicast features that enable the economical replication of halo data into multiple compute tiles as required in many cases. The software can be simplified with an automatic hardware mechanism that replicates all needed data into compute tiles.

One challenge with both solutions arises if a workload is split in such a way that certain tensor dimensions are not equal across the sub-workloads. Depending on the tensor storage format used, different tensor dimensions will result in different ways in which the data is laid out in memory. When halo data are transferred between tiles with different data memory layouts, a mechanism is required to properly align these tensor pieces.

Some solutions to the challenge simply avoid any workload splitting that could result in replications of unaligned halo tensor data among compute tiles. If tensor workloads are split such that the issue doesn't occur, the problem is not existent. However, the ways in which the tensor workload can be split becomes very restricted. This may lead to non-optimal workload splitting where the efficiency of the compute platform is deteriorated, and the hardware resources are underutilized. It could also mean that substantial acceleration opportunities are missed for workloads that could have been split across more than one compute core otherwise. These workloads can be limited to a single compute core and cannot benefit from the presence of multiple cores in the system.

Other solutions may involve the operation of a general-purpose processor or a direct memory access (DMA) engine that reads in halo segments in one format, performs adequate reformatting, and then writes out the result to the appropriate compute tiles. However, using a general-purpose processor or DMA engine to perform data re-alignment can be very inefficient. The data in question would first need to be read in, it then needs to be re-formatted and written out to all the targets that it is destined for. Furthermore, it would be necessary to use a synchronization mechanism as the external processing engines would require knowledge of when to start the work. Overall, a high processing delay would be introduced that may ripple through the entire system and substantially degrade the performance gains. The use of a general-purpose processor may additionally consume more power than budgeted for. The processor may be located far away from where the data is typically held, and thus, require considerate amount of power to read in and write out the data over long and possibly slow channels. Furthermore, general-purpose circuitry will generally be less power-efficient for special operations like halo data reformatting. Also, a general-processor may have to be used for many different tasks in the system and not always be available to perform additional time-critical processing. Depending on the load of the processor, an additional delay may occur.

Embodiments of the present disclosure may improve on at least some of the challenges and issues described above by providing compute tiles including halo pipelines that can process halo data for facilitating replication of the halo data from a compute tile, which has generated the halo data, into one or more other compute tiles. For purpose of illustration, the compute tile that generates the halo data is referred to as the local compute tile. The halo pipeline may be implemented within the local compute tile. The memory in the local compute tile that stores the halo data is referred to as a local memory. A compute tile that receives the halo data from the local compute tile is referred to as a remote compute tile. The memory in a remote compute tile that stores the halo data after the halo data is received from the local compute tile is referred to as a remote memory. The replication of halo data from a local memory to a remote memory is referred to as halo transfer. The halo pipeline may be capable of generating remote addresses for writing halo data into the remote memory, realigning halo data to fit the halo data in a memory layout in the remote memory, partitioning memory transactions of halo data, multicasting memory transactions, other types of processing for halo transfer, or some combination thereof.

An example halo pipeline may receive a memory transaction for writing a data block. The data block may include a sequence of activations in an input tensor of a convolution. The activations are computed by a local compute tile through MAC operations. The halo pipeline may determine whether the activations are in a halo region of the convolution, e.g., based on metadata of one or more halo regions associated with the convolution. The halo pipeline may disregard the memory transaction in embodiments where the activations are not in any halo region. In embodiments where the activations are in one or more halo regions, the halo pipeline may further process the memory transaction. For instance, the halo pipeline may generate a remote address based on a local address of the memory transaction. The local address indicates the address of the data block in the local memory. The remote address is an address in a remote memory to which the data block is to be written. In some embodiments, the halo pipeline may generate the remote address based on the local address and an address offset specified in the metadata of the halo region where the activations reside. In embodiments where the address offset (or reshaping of memory layout described below) causes the data block to cross a word boundary, the halo pipeline may partition the memory transaction into two transactions to avoid an error in the write of the data block.

The halo pipeline may also compare dimensions of the local tensor (a tensor to be used by the local compute tile for further MAC operations) and the remote tensor (a tensor to be used by the remote compute tile for MAC operations). The activations are included in both the local tensor and remote tensor. In embodiments where a dimension of the local tensor is different from a corresponding dimension of the remote tensor, the halo pipeline may reshape the memory layout of the data block so that the data block can fit in the memory layout of the remote tensor in the remote memory. In embodiments where the activations need to be replicated into multiple remote compute tiles, the halo pipeline can facilitate multicasting of the memory transaction. For instance, the halo pipeline may form a data package that includes one or more multicast bits and the remote address. The one or more multicast bits may be used by a communication channel between the compute tiles (e.g., a network-on-chip) to send the memory transaction to multiple remote compute tiles.

The halo pipeline in the present disclosure can process halo data to enable replication of halo data among compute tiles that operate in parallel to run sub-workloads of a convolution, despite the difference in tensor dimensions in the compute tiles. As the halo pipeline can be implemented within the local compute tile (e.g., as a dedicated hardware block), the present disclosure does not require any external general-purpose processor or DMA engine. The halo pipeline can have better efficiency than external general-purpose processors and DMA engines. The halo pipeline, as a local hardware block, can add predictability enabling real-time processing and high processing speed that could otherwise not be achieved. As soon as halo data has been generated, it can be processed by the halo pipeline and prepared for transfer to remote compute tiles. In contrast, any external general-purpose helper hardware block might be occupied with other tasks when needed. Also, there is no additional task synchronization required as the halo pipeline integrates seamlessly into the existing compute tile and can perform necessary tasks transparently on-the-fly. With a general-purpose processor or similar, it could be, for instance, necessary to communicate when data is available for processing; this overhead is simply eliminated. Also, the need for complex software code can be removed and therefore, the time and effort required to develop complicated software code and to debug software codes run on multi-core systems can be avoided. Also, the halo pipeline can include dedicated circuitry that is designed to perform specific tasks needed for halo transfer and consume as little power as possible. The consumption of power can be less compared with using a general-purpose processor that is designed for a wide range of applications.

Compared with currently available technologies, the present disclosure can provide more flexibility and efficiency for deep learning workload partition. The present disclosure can therefore maximize the benefit from the presence of multiple cores in the system. With the ability to schedule hybrid workloads, the overall system efficiency increases as otherwise less optimal workload partition, or no workload partition would have to be employed.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The DNN systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN

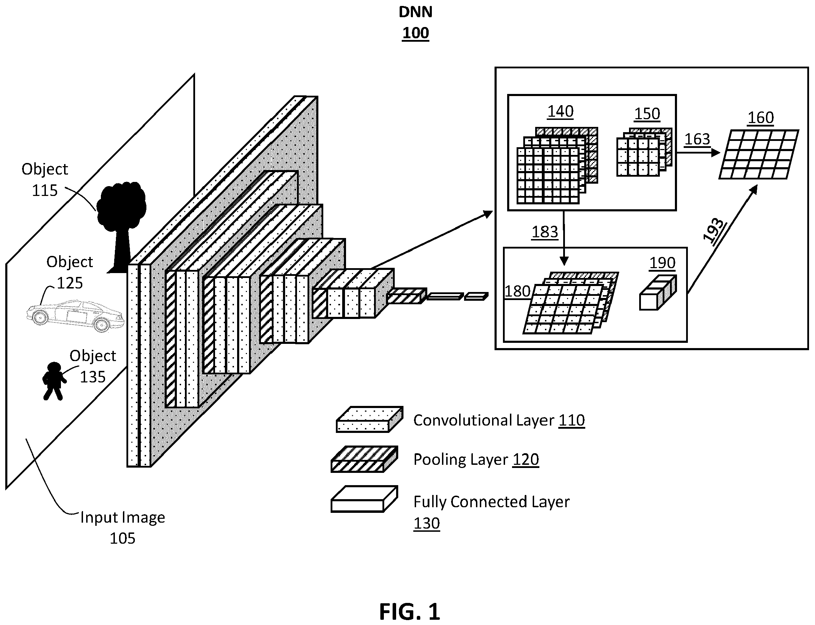

FIG. 1 illustrates an example DNN 100, in accordance with various embodiments. For purpose of illustration, the DNN 100 in FIG. 1 is a convolutional neural network (CNN). In other embodiments, the DNN 100 may be other types of DNNs. The DNN 100 is trained to receive images and output classifications of objects in the images. In the embodiments of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers. In an inference of the DNN 100, the layers of the DNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the DNN 100 is a convolutional layer 110. In an example, a convolutional layer 110 performs a convolution on an input tensor 140 (also referred to as input feature map (IFM) 140) and a filter 150. As shown in FIG. 1, the IFM 140 is represented by a 7×7×3 three-dimensional (3D) matrix. The IFM 140 includes 3 input channels, each of which is represented by a 7×7 two-dimensional (2D) matrix. The 7×7 2D matrix includes 7 input elements (also referred to as input points) in each row and 7 input elements in each column. The filter 150 is represented by a 3×3×3 3D matrix. The filter 150 includes 3 kernels, each of which may correspond to a different input channel of the IFM 140. A kernel is a 2D matrix of weights, where the weights are arranged in columns and rows. A kernel can be smaller than the IFM. In the embodiments of FIG. 1, each kernel is represented by a 3×3 2D matrix. The 3×3 kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D matrix. The 5×5 2D matrix includes 5 output elements (also referred to as output points) in each row and 5 output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D matrix of output elements. As such, the 2D output matrix (i.e., the OFM 160) from the standard convolution 163 is referred to as an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a 5×5×3 3D matrix. The depthwise output tensor 180 includes 3 output channels, each of which is represented by a 5×5 2D matrix. The 5×5 2D matrix includes 5 output elements in each row and 5 output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculate the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has 4 hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presence of features in the patches of the feature maps. A pooling layer 120 is placed between 2 convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receive an input operand. The input operand defines the output of the convolutional layers 110 and pooling layers 120 and includes the values of the last feature map generated by the last pooling layer 120 in the sequence. The fully connected layers 130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and return an operand of size N, where N is the number of classes in the image classification problem. In the embodiments of FIG. 1, N equals 3, as there are 3 objects 115, 125, and 135 in the input image. Each element of the operand indicates the probability for the input image 105 to belong to a class. To calculate the probabilities, the fully connected layers 130 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 115 being a tree, a second probability indicating the object 125 being a car, and a third probability indicating the object 135 being a person. In other embodiments where the input image 105 includes different objects or a different number of objects, the individual values can be different.

### Example Convolution

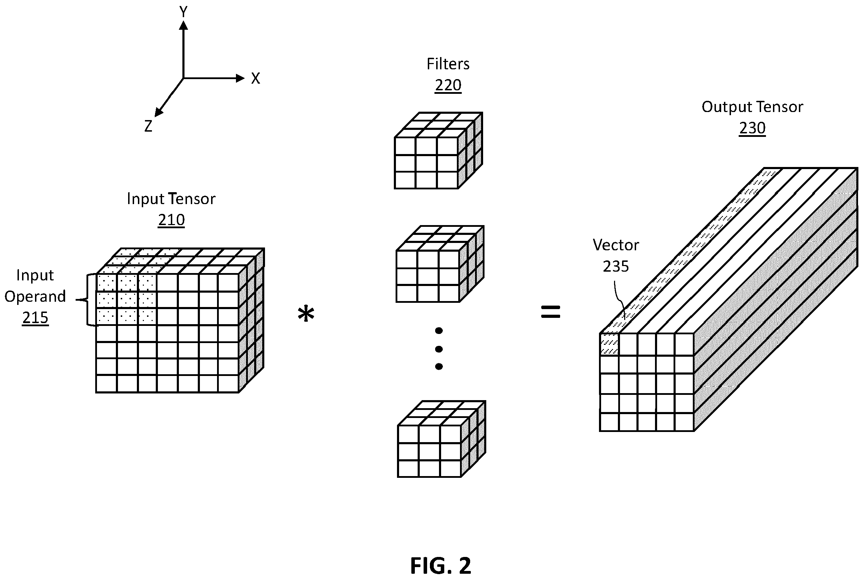

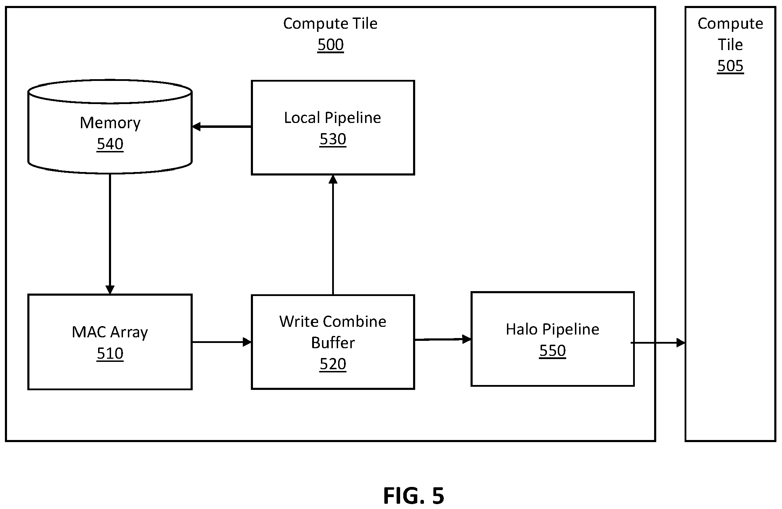

FIG. 2 illustrates an example convolution, in accordance with various embodiments. The convolution may be a convolution in a convolutional layer of a DNN, e.g., a convolutional layer 110 in FIG. 1. The convolution can be executed on an input tensor 210 and filters 220 (individually referred to as "filter 220"). A result of the convolution is an output tensor 230. In some embodiments, the convolution is performed by one or more compute tiles, such as the compute tiles 500 and 505 in FIG. 5. The output tensor may be written into a local memory of the compute tile.

In the embodiments of FIG. 2, the input tensor 210 includes activations (also referred to as "input activations," "elements," or "input elements") arranged in a 3D matrix. An input element is a data point in the input tensor 210. The input tensor 210 has a spatial size *Hᵢₙ* × *Wᵢₙ* × *Cᵢₙ,* where *Hᵢₙ* is the height of the 3D matrix (i.e., the length along the Y axis, which indicates the number of activations in a column in the 2D matrix of each input channel), *Wᵢₙ* is the width of the 3D matrix (i.e., the length along the X axis, which indicates the number of activations in a row in the 2D matrix of each input channel), and *Cᵢₙ* is the depth of the 3D matrix (i.e., the length along the Z axis, which indicates the number of input channels). For purpose of simplicity and illustration, the input tensor 210 has a spatial size of 7×7×3, i.e., the input tensor 210 includes three input channels and each input channel has a 7×7 2D matrix. Each input element in the input tensor 210 may be represented by a (X, Y, Z) coordinate. In other embodiments, the height, width, or depth of the input tensor 210 may be different.

Each filter 220 includes weights arranged in a 3D matrix. The values of the weights may be determined through training the DNN. A filter 220 has a spatial size *H_{f}* × *W_{f}* × *C_{f},* where *H_{f}* is the height of the filter (i.e., the length along the Y axis, which indicates the number of weights in a column in each kernel), *W_{f}* is the width of the filter (i.e., the length along the X axis, which indicates the number of weights in a row in each kernel), and *C_{f}* is the depth of the filter (i.e., the length along the Z axis, which indicates the number of channels). In some embodiments, *C_{f}* equals *Cᵢₙ.* For purpose of simplicity and illustration, each filter 220 in FIG. 2 has a spatial size of 3×3×3, i.e., the filter 220 includes 3 convolutional kernels with a spatial size of 3×3. In other embodiments, the height, width, or depth of the filter 220 may be different. The spatial size of the convolutional kernels is smaller than the spatial size of the 2D matrix of each input channel in the input tensor 210.

An activation or weight may take one or more bytes in a memory. The number of bytes for an activation or weight may depend on the data format. For example, when the activation or weight has a INT8 format, the activation takes one byte. When the activation or weight has a FP16 format, the activation or weight takes two bytes. Other data formats may be used for activations or weights.

In the convolution, each filter 220 slides across the input tensor 210 and generates a 2D matrix for an output channel in the output tensor 230. In the embodiments of FIG. 2, the 2D matrix has a spatial size of 5×5. The output tensor 230 includes activations (also referred to as "output activations," "elements," or "output element") arranged in a 3D matrix. An output activation is a data point in the output tensor 230. The output tensor 230 has a spatial size *Hₒᵤₜ* × *Wₒᵤₜ* × *Cₒᵤₜ,* where *Hₒᵤₜ* is the height of the 3D matrix (i.e., the length along the Y axis, which indicates the number of output activations in a column in the 2D matrix of each output channel), *Wₒᵤₜ* is the width of the 3D matrix (i.e., the length along the X axis, which indicates the number of output activations in a row in the 2D matrix of each output channel), and *Cₒᵤₜ* is the depth of the 3D matrix (i.e., the length along the Z axis, which indicates the number of output channels). *Cₒᵤₜ* may equal the number of filters 220 in the convolution. *Hₒᵤₜ* and *Wₒᵤₜ* may depend on the heights and weights of the input tensor 210 and each filter 220.

As a part of the convolution, MAC operations can be performed on a 3×3×3 input operand 215 (which is highlighted with a dotted pattern in FIG. 2) in the input tensor 210 and each filter 220. The result of the MAC operations on the input operand 215 and one filter 220 is an output activation. In some embodiments (e.g., embodiments where the convolution is an integral convolution), an output activation may include 8 bits, e.g., one byte. In other embodiments (e.g., embodiments where the convolution is a floating-point convolution), an output activation may include more than one byte. For instance, an output element may include two bytes.

After the MAC operations on the input operand 215 and all the filters 220 are finished, a vector 235 is produced. The vector 235 is highlighted with slashes in FIG. 2. The vector 235 includes a sequence of output activations, which are arranged along the Z axis. The output activations in the vector 235 have the same (x, y) coordinate, but the output activations correspond to different output channels and have different Z coordinates. The dimension of the vector 235 along the Z axis may equal the total number of output channels in the output tensor 230. After the vector 235 is produced, further MAC operations are performed to produce additional vectors till the output tensor 230 is produced.

In the process of producing the output tensor 230, a plurality of write transactions are formed for writing the output activations in the output tensor into the local memory of the compute tile. A write transaction includes a data block and metadata associated with the data block. The data block includes one or more output activations and is to be written into the memory. An example of the data block is the vector 235, a portion of the vector 235, or multiple vectors in the output tensor 230. In some embodiments, the output activations in the data block may have the same (x, y) coordinate but different Z coordinates.

The metadata in a write transaction provides information of one or more attributes of the data block, e.g., information to be used for determining how to write the data block. In some embodiments, the metadata includes data specifying a memory address where the data block is to be written, (x, y) coordinate(s) of the data block, bytes in the data block, and so on. The metadata may also indicate which bytes are enabled. An enabled byte is to be written into the memory, versus an unenabled byte is not to be written into the memory. The metadata may include an enablement value for each byte in the data block. The enablement value may be 1, which indicates that the corresponding byte is enabled, or 0, which indicates that the corresponding byte is not enabled.

The metadata may further include information indicating whether the data block is data in an input or output tensor ("activation data") or data in a sparsity bitmap ("sparsity data"). A sparsity bitmap is associated with a tensor (e.g., the input tensor 210, a portion of the input tensor 210, the output tensor 230, or a portion of the output tensor 230) that has been compressed by reducing sparsity, e.g., by removing one or more activations having zero values. The sparsity bitmap includes a plurality of bitmap elements, each of which may correspond to a different activation in the tensor. A value of a bitmap element is determined based at least on a value of the corresponding activation. For instance, for each activation having a non-zero value, the corresponding bitmap element has a value of one. For each activation having a zero value, the corresponding bitmap element has a value of zero. A position of a bitmap element in the bitmap may match the position of the corresponding activation in the tensor before compression. A bitmap element may include a bit.

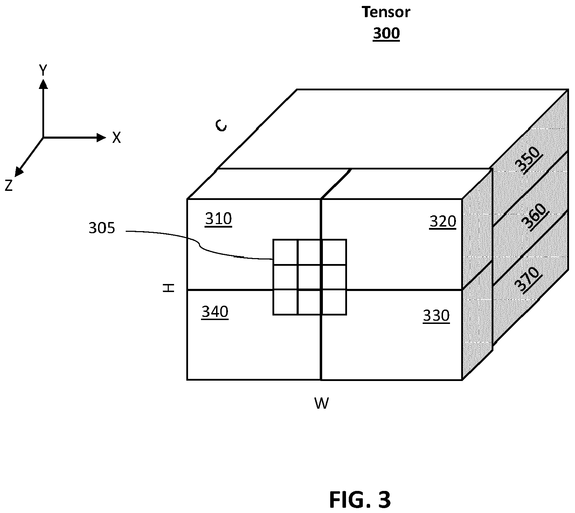

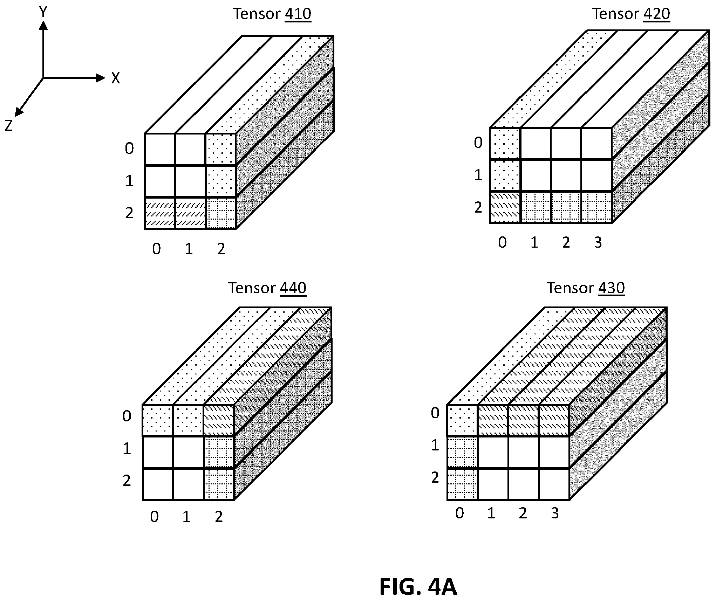

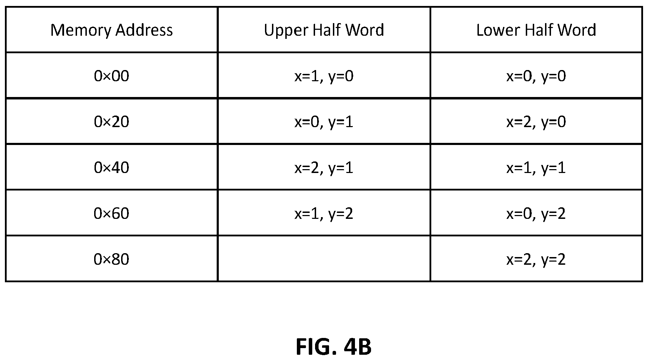

A write transaction may be used to write activations from the memory of a compute tile that computed the activations to the memory of another compute tile. The compute tile that computed the activations is referred to as the local compute tile, and its memory is referred to as the local memory. The other compute tile that did not compute the activations is referred to as the remote compute tile, and its memory is referred to as the remote memory. The activations are stored in both the local memory and the remote memory. The replication of the activations may be needed in embodiments where the workload for running a convolution, in which the activations are used as input activations, is partitioned into sub-workloads separately run by multiple compute tiles. A subtensor that includes activations needed to be copied from a compute tile to another compute tile for convolution workload partition is referred to as a halo tensor or halo region. More details regarding convolution workload partition and halo tensor are described below in conjunction with FIGS. 3 and 4.

### Example Convolution Workload Partition

FIG. 3 illustrates partition of a workload of a convolution, in accordance with various embodiments. FIG. 3 shows a tensor 300, which may be used as an input tensor of the convolution. The tensor 300 may be a result of another deep learning operation that is precedent to the convolution in the DNN. The precedent deep learning operation may be a convolution, a pooling operation, a linear operation, an elementwise operation, and so on. The tensor 300 has a spatial size of *H* × *W* × C. In FIG. 3, the tensor 300 is split into subtensors 310, 320, 330, 340, 350, 360, and 370, each of which is a portion of the tensor 300. For purpose of illustration, the tensor 300 is split across the X-, Y-, and Z-axes. In other embodiments, the tensor 300 may be split in different ways. For instance, the tensor 300 may be split across one or two of the X-, Y-, and Z-axes. The number of subtensors generated from splitting the tensor 300 may vary.

In some embodiments, the subtensors 310, 320, 330, 340, 350, 360, and 370 may be computed separately by seven compute tiles in the precedent deep learning operation. Each subtensor is stored in the memory of the compute tile that computed the subtensor (i.e., the local memory of the local compute tile) and is to be used by the local compute tile to perform a sub-workload of the convolution. However, the local compute tile may also need some data from a remote compute tile to complete the sub-workload of the convolution.

As shown in FIG. 3, an input operand 305 of the convolution, which has the same size as the filter of the convolution, includes activations positioned in multiple subtensors: subtensors 310, 320, 330, 340, 350, and 360. The six compute tiles that computed the subtensors 310, 320, 330, 340, 350, and 360 will need data residing in the memories of the other five compute tiles to run the MAC operations on the input operand 305. For instance, the compute tiles that computed the subtensors 320, 330, 340, 350, and 360 will need four activation vectors from the compute tile that computed the subtensor 310. Similarly, the compute tiles that computed the subtensors 310, 320, 340, 350, and 360 will need one activation vector from the compute tile that computed the subtensor 330. The activations that need to be replicated in multiple compute tiles are referred to as halo data or halo activations. The halo activations are located at edges of subtensors. The one or more activations that needs to be transferred from a compute tile to another compute tile may collectively be referred to as a halo tensor or halo region.

FIG. 4A illustrates tensors generated from convolution workload partition, in accordance with various embodiments. FIG. 4A shows four tensors 410, 420, 430, and 440, which represent four workloads assigned to four compute tiles for a convolution. The four compute tiles can perform MAC operations on the four tensors 410, 420, 430, and 440, respectively. As shown in FIG. 4, each of the four tensors 410, 420, 430, and 440 includes a number of vectors. A vector may be represented by a (x, y) coordinate. For purpose of illustration and simplicity, each vector includes all the channels in the input tensor of the convolution.

Each of the four tensors 410, 420, 430, and 440 is stored in a memory of a compute tile, i.e., the local memory of the local compute tile. Each tensor includes activations computed by the local compute tile (i.e., local activations, which are not highlighted in FIG. 4A) as well as activations computed by remote compute tiles (i.e., remote activations, which are highlighted with patterns in FIG. 4A). The activations in the four tensors 410, 420, 430, and 440 may constitute the input tensor of the convolution. The highlighted activations are halo activations that are replicated in multiple compute tiles. One or more halo activations copied from a compute tile to another compute tile constitute a halo tensor.

Taking the tensor 410 for example, the local compute tile of the tensor 410 produces vectors (0,0), (0,1), (1,0), and (1,1) in the tensor 410, e.g., through MAC operations for a precedent convolution. Vectors (0,2), (1,2), (2,0), (2,1), (2,2) are produced by the remote compute tiles and are included in the other three tensors 420, 430, and 440. For instance, vectors (2,0) and (2,1) in the tensor 410 may be the replication of vectors (1,0) and (1,1) in the tensor 420. Vector (2,2) in the tensor 410 may be the replication of vector (1,1) in the tensor 430. Vectors (0,2) and (1,2) in the tensor 410 may be the replication of vectors (0,1) and (1,1) in the tensor 440.

For the tensor 420, vectors (1,0), (1,1), (2,0), (2,1), (3,0), and (3,1) are produced by the local compute tile. Vectors (0,0), (0,1), (0,2), (1,2), (2,2), and (3,2) are produced by the remote compute tiles and are included in the other three tensors 410, 430, and 440. Vectors (0,0) and (0,1) in the tensor 420 may be the replication of vectors (1,0) and (1,1) in the tensor 410. Vectors (1,2), (2,2) and (3,2) in the tensor 420 may be the replication of vectors (1,1), (2,1), and (3,1) in the tensor 430. Vector (0,2) in the tensor 420 may be the replication of vector (1,1) in the tensor 440.

For the tensor 430, vectors (1,1), (1,2), (2,1) (2,2), (3,1), and (3,2) are produced by the local compute tile. Vectors (0,0), (0,1), (0,2), (1,0), (2,0), and (3,0) are produced by the remote compute tiles and are included in the other three tensors 410, 420, and 440. Vector (0,0) in the tensor 430 may be the replication of vector (1,1) in the tensor 410. Vectors (1,0), (2,0) and (3,0) in the tensor 430 may be the replication of vectors (1,1), (2,1), and (3,1) in the tensor 420. Vectors (0,1) and (0,2) in the tensor 430 may be the replication of vectors (1,1) and (1,2) in the tensor 440.

For the tensor 440, vectors (0,1), (0,2), (1,1) and (1,2) are produced by the local compute tile. Vectors (0,0), (1,0), (2,0), (2,1) and (2,2) are produced by the remote compute tiles and are included in the other three tensors 410, 420, and 430. Vectors (0,0) and (1,0) in the tensor 440 may be the replication of vectors (0,1) and (1,1) in the tensor 410. Vector (2,0) in the tensor 440 may be the replication of vector (1,1) in the tensor 420. Vectors (2,1) and (2,2) in the tensor 440 may be the replication of vectors (1,1) and (1,2) in the tensor 430.

FIG. 4B shows a memory layout for the tensor 410 in FIG. 4A, in accordance with various embodiments. The tensor 410 is stored in the local memory of the local compute tile. The local activations produced by the local compute tile are written into the local memory based on their positions in the tensor 410. Also, memory spaces are reserved for the remote activations based on positions of the remote activations in the tensor 410. After the remote activations are transferred from the remote compute tiles to the local compute tiles, the remote activations can be stored in the reserved memory spaces. In the embodiment of FIG. 4B, activations (including both remote activations and local activations) are stored first across the depth (Z axis), then the width (X axis), and lastly across the height (Y axis) of the tensor 410. Even though not shown in FIG. 4B, the tensors 420, 430, and 440 may also have memory layouts based on the positions of their activations.

### Example Compute Tile with Halo Pipeline

FIG. 5 is a block diagram of a compute tile 500 including a halo pipeline 550, in accordance with various embodiments. The compute tile 500 performs computation for deep learning operations, such as convolution, pooling operation, elementwise operation, and so on. The compute tile 500 may run a DNN layer, or a portion of the DNN layer. The compute tile 500 is in communication with another compute tile 505. In some embodiments, the compute tiles 500 and 505 may operate in parallel to run a convolution. The workload for the convolution may be split between the two compute tiles 500 and 505. In some embodiments, the compute tiles 500 and 505 can communicate through a network-on-chip. The compute tiles 500 and 505 may include similar or even same components.

In addition to the halo pipeline 550, the compute tile 500 also includes an MAC array 510, a WCB 520, a local pipeline 530, and a memory 540. In other embodiments, alternative configurations, different or additional components may be included in the compute tile 500. Further, functionality attributed to a component of the compute tile 500 may be accomplished by a different component included in the compute tile 500 or by a different system. Also, the compute tile 500 may be coupled to more than one compute tile and a convolution workload can be split among more than two compute tiles.

The MAC array 510 includes MAC units arranged in columns, or columns and rows. Each MAC unit can perform MAC operations. In some embodiments, a MAC unit includes a multiply unit for performing multiplications. An MAC unit may also include an accumulate unit for performing accumulations. A column of MAC units is referred to as an MAC column. An MAC column may be associated with one or more MAC lanes. A MAC lane is a path for loading data into a MAC column. A MAC lane may be also referred to as a data transmission lane or data loading lane. A MAC column may have multiple MAC lanes. The loading bandwidth of the MAC column is an aggregation of the loading bandwidths of all the MAC lanes associated with the MAC column. With a certain number of MAC lanes, data can be fed into the same number of independent MAC units simultaneously. In some embodiments where a MAC column has four MAC lanes for feeding activations or weights into the MAC column and each MAC lane may have a bandwidth of 16 bytes, the four MAC lanes can have a total loading bandwidth of 64 bytes.

Through the MAC lanes, each of at least a subset of the MAC units in the MAC array 510 may receive two signals: an input operand and a weight operand. The input operand may be a portion of an input tensor of a convolution, and the weight operand may be a portion of a filter of the convolution. In some embodiments, the input operand includes a vector in the input tensor, the vector may be a sequence of input elements having the same (x, y) coordinates but different Z coordinate. The weight operand includes a vector including a sequence of weights having the same (x, y) coordinates but different Z coordinate. The MAC unit may generate an output signal, which may be referred to as an output operand. The output operand may be a sequence of output elements having the same (x, y) coordinates but different Z coordinate. The output operand may constitute a data block in a write transaction.

The WCB 520 receives write transactions from the MAC array 510. The write transactions are associated with an output of the MAC array 510. The output includes local activations computed by the MAC array 510 from MAC operations. The output may be the output tensor (e.g., the output tensor 230) of a convolution or a portion of the output tensor. In some embodiments (e.g., embodiments where the output is generated based on sparsity processing), the WCB 520 may also receive one or more sparsity bitmaps associated with the output. A sparsity bitmap may specify sparsity in at least a portion of an output vector (e.g., the vector 235 in FIG. 2). The sparsity bitmap may include a plurality of bitmap elements, each of which may correspond to an output activation and indicate whether the output activation has a zeroed or non-zeroed value. For instance, for an output activation having a non-zero value, the corresponding bit has a value of one. For an output activation having a zero value, the corresponding bitmap element has a value of zero. A position of a bitmap element in the sparsity bitmap may match the position of the corresponding output activation in the vector. In some embodiments, a bitmap element may include a bit. An activation may include one or more bytes. The storage size of a sparsity bitmap may be smaller than the storage size of the corresponding output vector.

A write transaction may include a data block to be written into a memory (e.g., the memory 540 or a remote memory). In some embodiments, the data block may be activation data, e.g., one or more output activations computed by the MAC array 510. An example of the data block is the vector 235, a portion of the vector 235, or multiple vectors in the output tensor 230. In some embodiments, the output activations in the data block may have the same (x, y) coordinate but different z coordinates. In other embodiments, the data block may be sparsity data, e.g., one or more sparsity bitmaps.

The write transaction may also include metadata associated with the data block. The metadata in a write transaction provides information of one or more attributes of the data block, e.g., information to be used for determining how to write the data block. In some embodiments, the metadata includes data specifying a memory address where the data block is to be written, (x, y) coordinate(s) of the data block in an output tensor, bytes in the data block, and so on. The metadata may also indicate which bytes are enabled. An enabled byte is to be written into the memory, versus an unenabled byte is not to be written into the memory. The metadata may include an enablement value for each byte in the data block. The enablement value may be 1, which indicates that the corresponding byte is enabled, or 0, which indicates that the corresponding byte is not enabled. The metadata may further include information indicating whether the data block is activation data or sparsity data.

In some embodiments, the WCB 520 may combine multiple write transactions into a single write transaction. For instance, the WCB 520 may combine write transactions in which not all bytes are enabled. The WCB 520 may provide write transactions to the local pipeline 530 for writing data into the memory 540. The WCB 520 may also provide one or more write transactions to the halo pipeline 550 for writing data into a memory of the compute tile 505.

The local pipeline 530 provides a data transmission path for the WCB 520 to write data computed by the MAC array 510 into the memory 540. The local pipeline 530 may receive write transactions from the WCB 520 and transmit the data blocks in the write transactions to the memory 540. The local pipeline 530 may determine a memory address for a write transaction and the data block in the write transaction is written to the memory address in the memory 540. As the memory address is in the memory 540, i.e., the local memory of the compute tile 500, the memory address is also referred to as local address. In some embodiments, the local pipeline 530 may generate memory addresses for write transactions in a way that certain memory addresses are reserved for halo activations transmitted from another compute tile (e.g., the compute tile 505) to the memory 540.

The memory 540 is local to the compute tile 500. In the embodiments of FIG. 5, the memory 540 is inside the compute tile 500. In other embodiments, the memory 540 may be outside the compute tile 500. The memory 540 and the compute tile 500 can be implemented on the same chip. The memory 540 stores data used for or generated from convolutions, e.g., input activations, weights, and output activations. In some embodiments, the memory 540 includes one or more SRAMs (static random-access memories). The memory 540 may be register files. Some of the register files may be designated for input activations, weights, or output activations. In some embodiments, the memory 540 may also include one or more cache memories.

Input activations or weights may be written into the memory 540 from an external memory by a DMA engine. Output activations may be written into the memory 540 by the WCB 520 through the local pipeline 530. The output activations may be used as the input activations of subsequent deep learning operations by the MAC array 510. In embodiments where the MAC array 510 runs a portion of a convolutional workload, output activations computed by one or more other compute tiles (e.g., the compute tile 505) may be replicated into the memory 540 through halo write transactions. A halo write transaction may be associated with a memory address in the memory 540, and the data in the halo write transaction may be written to the memory address. In some embodiments, an address in the memory 540 corresponds to a fixed number of bytes. The fixed number, in an example, may be 32.

The halo pipeline 550 provides a data transmission path for the WCB 520 to write halo data into a memory of the compute tile 505. The compute tile 505 may include similar components as the compute tile 500. For instance, the compute tile 505 may also include an MAC array. The compute tile 505 may use its own local activations (i.e., activations generated by the MAC array in the compute tile 505) and halo activations from the halo pipeline 550 to perform further MAC operations. In some embodiments, activations computed by the MAC array in the compute tile 505 may also be halo data and can be replicated into the memory 540 for the MAC array 510 to perform MAC operations.

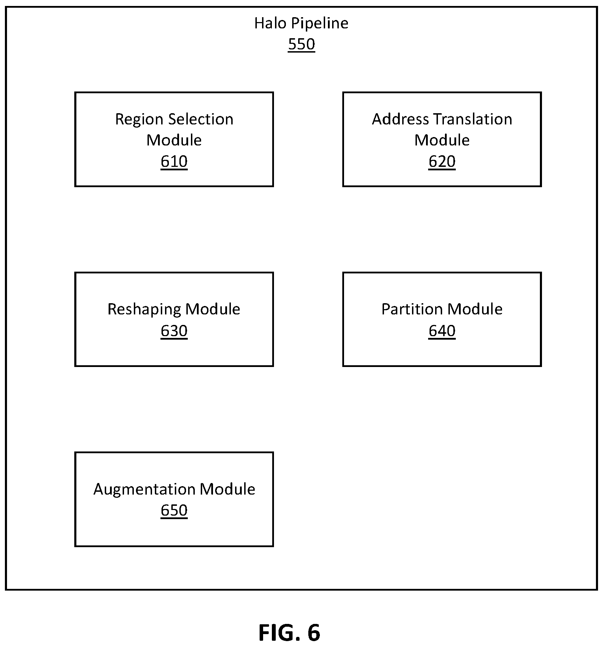

The halo pipeline 550 may process write transactions received from the WCB 520. In some embodiments, the halo pipeline 550 may determine whether the data block in a write transaction is halo data, e.g., based on metadata of the write transaction and metadata of a halo region. In embodiments where the halo pipeline 550 determines that the data block is halo data, the halo pipeline 550 may generate a remote address for the data block, e.g., based on a local address indicated in the metadata of the write transaction. The remote address is an address for writing the data block into a remote memory, e.g., the memory of the compute tile 505. In some embodiments, the halo pipeline 550 may reshape the data block or partition the write transaction into multiple write transactions to facilitating the write of the data block into the remote memory. The halo pipeline 550 may also facilitate multicasting the write transaction so that the write transaction can be used to write the data block into the memories of multiple compute tiles. Certain aspects of the halo pipeline 550 are described below in conjunction with FIG. 6.

Even though FIG. 5 shows two compute tiles 500 and 505 and one halo pipeline 550, halo data may be replicated among more than two compute tiles. The same halo data may be transferred from one compute tile to multiple compute tiles through one or more halo pipelines. In some embodiments, the halo pipeline 550 may be coupled to a network-on-chip. The network-on-chip may be coupled to a plurality of compute tiles and facilitate communications between the compute tiles.

FIG. 6 is a block diagram of the halo pipeline 550, in accordance with various embodiments. The halo pipeline 550 processes write transactions received from the WCB 520 for the purpose of replicating halo data into one or more remote memories. In the embodiments of FIG. 6, the halo pipeline 550 includes a region selection module 610, an address translation module 620, a reshaping module 630, a partition module 640, and an augmentation module 650. In other embodiments, alternative configurations, different or additional components may be included in the halo pipeline 550. Further, functionality attributed to a component of the halo pipeline 550 may be accomplished by a different component included in the halo pipeline 550, another component in the compute tile 500, or by a different device.

The region selection module 610 determines whether write transactions are for writing halo data. The region selection module 610 may select write transactions for writing halo data and further processes the write transactions. For write transactions that are not for writing halo data, the region selection module 610 may disregard the write transactions. In some embodiments, the region selection module 610 determines whether a write transaction is for writing halo data by determining whether the data in a write transaction falls into a halo region. The region selection module 610 may use metadata of the halo region and metadata of the write transaction to make the determination.

The metadata of the halo region may specify boundaries of the halo region. In some embodiments, the metadata specifies a set of x, y, and z coordinates of the halo region. The set may include a start x coordinate indicating a position where the halo region starts along the X axis, an end x coordinate indicating a position where the halo region ends along the X axis, a start y coordinate indicating a position where the halo region starts along the Y axis, an end y coordinate indicating a position where the halo region ends along the Y axis, a start z coordinate indicating a position where the halo region starts along the Z axis, and an end z coordinate indicating a position where the halo region ends along the Z axis.

The metadata of the write transaction may specify x, y, z coordinates of the data block in the write transaction. The region selection module 610 may determine whether the x coordinate of the data block is between the start x coordinate and the end x coordinate of the halo region. The region selection module 610 may also determine whether the y coordinate of the data block is between the start y coordinate and the end y coordinate of the halo region. The region selection module 610 may further determine whether the z coordinate of the data block is between the start z coordinate and the end z coordinate of the halo region. After determining that the coordinates of the data block are within the boundaries of the halo region, the region selection module 610 may determine that the data block is halo data in the halo region.

In some embodiments, the region selection module 610 may analyze the boundaries of multiple halo regions and determine whether the data block is in each of the halo regions. The number of possible halo regions may be specified by the number of halo region registers and may vary from platform to platform. The region selection module 610 may determine that the data block falls into multiple halo regions. For each halo region that the data block falls into, the region selection module 610 may generate a separate copy of the memory transaction and send to other components of the halo pipeline 550 for further processing.

In some embodiments, the number of halo regions depends on the number of compute tiles available for sharing a convolution workload and on the workload partition scheme. A more complex workload partition scheme may require more halo regions. The workload partition scheme may specify how to partition the input tensor of the convolution (e.g., partition across the width, height, depth, or some combination thereof), the number of subtensors produced from the input tensor through the partition, sizes of the subtensors, and so on. A halo region may be located at an edge of a subtensor, e.g., an edge where the subtensor is in contact with another subtensor in the input tensor. The number of subtensors may equal the number of compute tiles available for the workload. The number of halo regions in the input tensor may equal the number of compute tiles minus one.

The address translation module 620 generates remote addresses of halo data in the remote memory (e.g., a memory in the compute tile 505) based on local addresses of the halo data in the local memory (e.g., the memory 540). In some embodiments, the address translation module 620 may perform a linear address translation by applying an address offset to the local address of a data block in a memory transaction received by the halo pipeline 550. The address offset may be specified in the metadata of the halo region. The metadata of the halo region may specify an activation address offset and a sparsity address offset. The address translation module 620 may select the activation address offset or the sparsity address offset, e.g., based on metadata of the memory transaction that indicates whether the data block is activation data or sparsity data. In the address translation, the address translation module 620 may shift (e.g., shift to the left) bytes in the memory transaction by the address offset.

The reshaping module 630 adjusts remote addresses (e.g., addresses determined by the address translation module 620) of halo data based on dimensions of local tensors and remote tensors. A local tensor is a tensor to be used by the local compute tile to run a sub-workload of the convolution assigned to the local compute tile. The local tensor is a portion of the input tensor of the convolution and includes halo data. A remote tensor is a tensor to be used by a remote compute tile to run a sub-workload of the convolution assigned to the remote compute tile. The memory layout of the remote tensor includes addresses that are reserved for the halo data. The bytes at the reserved addresses may be arranged between the other bytes generated by the remote compute tile itself. The reshaping module 630 may adjust the remote address of the activations so that the new remote address can match the reserved address in the remote memory. The new remote addresses may constitute a new memory layout of the activations that has a different shape from the memory layout of the activations in the local memory.

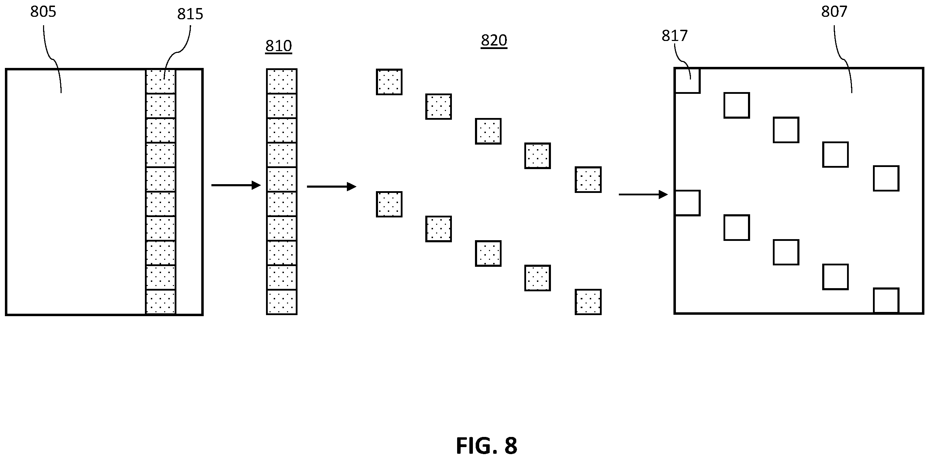

The reshaping or rearrangement of the memory layout of the activations may be needed in embodiments where dimensions of the local tensor and the remote tensor are different. In some embodiments, the reshaping module 630 compares a dimension of the local tensor with a corresponding dimension of the remote tensor. In an example, the dimension may be width. In other examples, the dimension may be depth or height. The difference in the dimension may cause a difference in the stride in the memory layouts, which may cause difference in positions of the activations in the memory layouts. The memory layout of the activations in the local memory would not fit into the reserved bytes in the memory layout of the remote tensor. In response to determining that the dimension of the local tensor is different from that of the remote tensor, the reshaping module 630 may change the memory layout of the activations from the local memory and generate new remote addresses for the activations based on the differences in the dimension between the local tensor and the remote tensor. The new remote addresses would match the reserved addresses in the memory layout of the remote tensor. More details regarding reshaping memory layout of halo activations are described below in conjunction with FIG. 8.

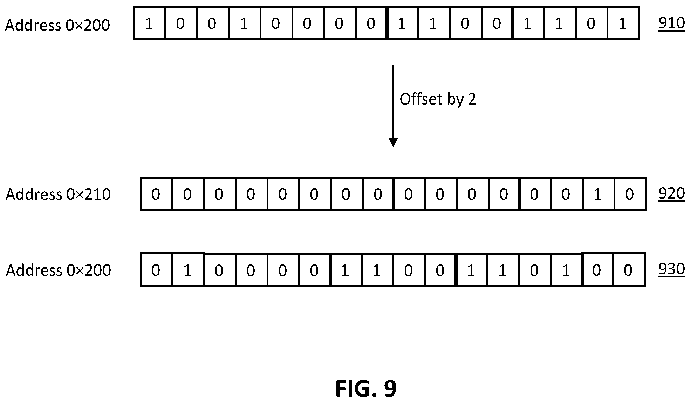

The partition module 640 splits a memory transaction into multiple memory transactions. In some embodiments, the address adjustment done by the address translation module 620 or the reshaping module 630 may cause the data block to span two adjacent memory words. For instance, after the address translation module 620 shifts the bytes in the memory transaction by an address offset, one or more of the bytes may be shifted across the word boundary and moved into a different memory word. The partition module 640 can produce two memory transactions for the two new words generated from the shift. The two memory transactions can be used to write the data block into the remote memory. More details regarding partition of a memory transaction for halo transfer are described below in conjunction with FIG. 9.

The augmentation module 650 facilitates multicast of a memory transaction to multiple remote compute tiles. In some embodiments, the augmentation module 650 combines multicast bits with bits in a remote address to form a data package. The multicast bits may specify the remote compute tiles. In some embodiments, the augmentation module 650 may retrieve the multicast bits from the metadata of the halo region. The augmentation module 650 may provide the data package to a communication module (e.g., a network-on-chip) associated with the local compute tile and remote compute tiles. The communication module may use the data package to send the write transaction to the remote address in memories in all the remote compute tiles identified by the multicast bits.

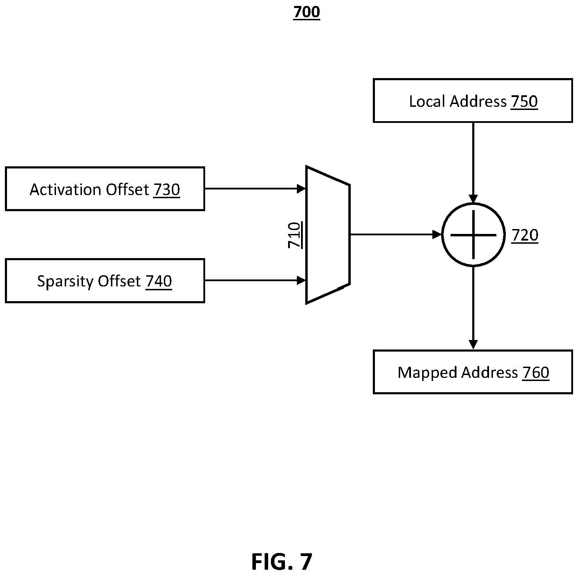

FIG. 7 illustrates an address translation module 700, in accordance with various embodiments. The address translation module 700 may be an embodiment of the address translation module 620 in FIG. 6. The address translation module 700 includes a multiplexer (MUX) 710 and an adder 720. The MUX 710 receives an activation offset 730 and a sparsity offset 740. The activation offset 730 and the sparsity offset 740 may be included in the metadata of a halo region. The activation offset 730 indicates an address offset for activations in the halo region for halo transfer purpose. The sparsity offset 740 indicates an address offset for a sparsity bitmap for activations in the halo region for halo transfer purpose. The MUX 710 selects one of the activation offset 730 and the sparsity offset 740, e.g., based on metadata of a memory transaction indicating whether the memory transaction is for activation data or sparsity data. In embodiments where the metadata of a memory transaction indicating whether the memory transaction is for activation data, the MUX 710 selects the activation offset 730. In embodiments where the metadata of a memory transaction indicating whether the memory transaction is for sparsity data, the MUX 710 selects the sparsity offset 740.

The MUX 710 provides the selected offset (the activation offset 730 or the sparsity offset 740) to the adder 720. The adder 720 also receives a local address 750 associated with the memory transaction. The local address 750 is an address of the data block of the memory transaction in the local memory. The adder 720 may accumulate the selected offset (the activation offset 730 or the sparsity offset 740) with the local address and produce a mapped address 760. The mapped address 760, in some embodiments, may be a remote address of the data block in a remote memory. In other embodiments, the mapped address 760 may be further adjusted, e.g., by the reshaping module 630, the partition module 640, or both, to generate the remote address of the data block.

FIG. 8 illustrates reshaping a memory layout 810 of halo data, in accordance with various embodiments. The memory layout 810 of the halo data is in a memory layout 805 of a first workload of a convolution. The first workload is a portion of a whole workload of the convolution. The memory layout 805 may be for a local tensor to be used by a local compute tile to run the first workload. In the memory layout 805, a plurality of bytes 815 (individually referred to as "byte 815") are arranged with a fixed offset between adjacent bytes 815. The bytes 815 are for the activations in the halo data. One or more bytes 815 may be used for an individual activation in the local tensor. The halo data can be read from the local memory with the memory layout 810.

FIG. 8 also shows a memory layout 807 of a second workload of the convolution. The second workload is a different portion of the convolution workload from the first workload. The memory layout 807 may be for a remote tensor to be used by a remote compute tile to run the second workload. Some bytes 817 (individually referred to as "byte 817") in the memory layout 807 are being reserved for storing the activations in the halo data. However, given a difference in dimensions of the local tensor and the remote tensor, the layout of the bytes 817 are different from the layout of the bytes 815 in the memory layout 805. The bytes 817 are arranged with another fixed offset (which is different from the offset in the memory layout 810) between adjacent bytes 817, as shown in FIG. 8.

To place the activations into the bytes 817 in the remote tensor, the memory layout 810 is rearranged and changed to a new memory layout 820. The memory layout 820 has the same shape as the layout of the bytes 817 in the memory layout 807. That way, the activations can be placed into the bytes 817. In some embodiments, the conversion of the memory layout 810 to the memory layout 820 may be performed by the reshaping module 630 in FIG. 6.

FIG. 9 illustrates partition of a memory transaction 910, in accordance with various embodiments. For purpose of illustration, FIG. 9 shows byte enablement values of bytes in the memory transaction 910. For purpose of illustration, the memory transaction 910 includes 16 bytes, which may constitute a word in the memory. Each number in the memory transaction 910 shown in FIG. 9 is a byte enablement value of one of the 16 bytes. 1 means that the corresponding byte is to be written into a memory (e.g., a remote memory); 0 means that the corresponding byte is not to be written into the memory. The memory transaction 910 has a local address of 0×200. The local address is offset by 2, e.g., by the address translation module 620 in FIG. 6. The address translation module 620 shifts all the bytes in the memory transaction 910 to the left by 2, which may result in the first two bytes crossing the word boundary and being moved out from the address 0×200.

To address that issue, the memory transaction 910 is split into two memory transactions 920 and 930. The memory transaction 920 includes the two bytes that are moved out from the address 0×200. The memory transaction 930 includes the other 14 bytes from the memory transaction 910. For purpose of illustration, FIG. 9 shows byte enablement values of bytes in the memory transactions 920 and 930. The partition of the memory transaction 910 into the memory transactions 920 and 930 may be done by the partition module 640 in FIG. 6.

### Example MAC Array

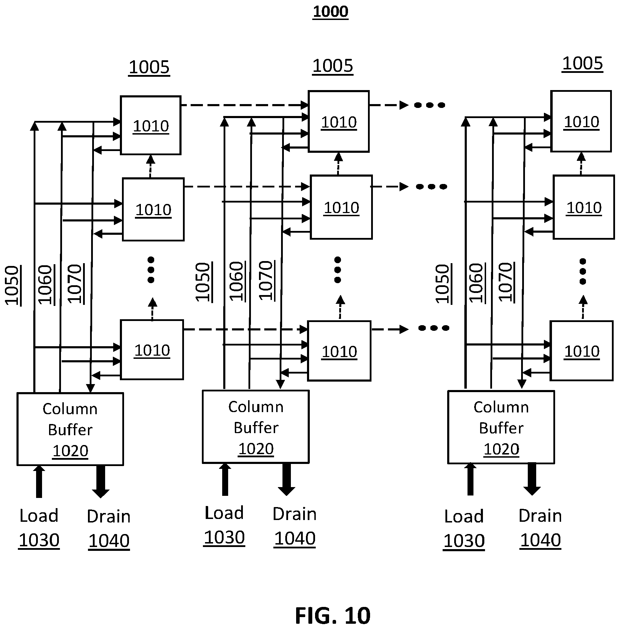

FIG. 10 illustrates an example MAC array 1000, in accordance with various embodiments. The MAC array 1000 is an embodiment of the MAC array 510 in FIG. 5. The MAC array 1000 includes a plurality of MAC units 1010 (individually referred to as "MAC unit 1010"). The MAC units 1010 perform MAC operations, such as integer MAC operations, floating-point MAC operations, and so on. The MAC units 1010 may also be referred to as neurons or nodes in the DNN. Each MAC unit 1010 has 2 input signals 1050 and 1060 and an output signal 1070. The input signal 1050 is at least a portion of an input tensor of a convolution. The input signal 1060 is at least a portion of a filter of the convolution. In some embodiments, the input signal 1050 of a MAC unit 1010 includes one or more input operands, and the input signal 1060 includes one or more weight operands.

Each MAC unit 1010 performs an MAC operation on the input signals 1050 and 1060 and outputs the output signal 1070, which is a result of the MAC operation. Some or all of the input signals 1050 and 1060 and the output signal 1070 may be in an integer format, such as INT8, or floating-point format, such as FP16 or BF16. For purpose of simplicity and illustration, the input signals and output signal of all the MAC units 1010 have the same reference numbers, but the MAC units 1010 may receive different input signals and output different output signals from each other. Also, a MAC unit 1010 may be different from another MAC unit 1010, e.g., including more, fewer, or different components.

As shown in FIG. 10, the MAC units 1010 are connected to each other, as indicated by the dash arrows in FIG. 10. The output signal 1070 of an MAC unit 1010 may be sent to many other MAC units 1010 (and possibly back to itself) as input signals via the interconnections between MAC units 1010. In some embodiments, the output signal 1070 of an MAC unit 1010 may incorporate the output signals of one or more other MAC units 1010 through an accumulate operation of the MAC unit 1010 and generate an internal partial sum of the MAC array. Certain aspects of the MAC units 1010 are described below in conjunction with FIG. 5.

In the embodiments of FIG. 10, the MAC units 1010 are arranged into columns 1005 (individually referred to as "column 1005" or "MAC column 1005"). The input and weights of the layer may be distributed to the MAC units 1010 based on the columns 1005. Each column 1005 has a column buffer 1020. The column buffer 1020 stores data provided to the MAC units 1010 in the column 1005 for a short amount of time. The column buffer 1020 may also store data output by the last MAC unit 1010 in the column 1005. The output of the last MAC unit 1010 may be a sum of the MAC operations of all the MAC units 1010 in the column 1005, which is a column-level internal partial sum of the MAC array 1000. In other embodiments, input and weights may be distributed to the MAC units 1010 based on rows in the MAC array 1000. The MAC array 1000 may include row buffers in lieu of column buffers 1020. A row buffer may store input signals of the MACs in the corresponding row and may also store a row-level internal partial sum of the MAC array 1000.

As shown in FIG. 10, each column buffer 1020 is associated with a load 1030 and a drain 1040. The data provided to the column 1005 is transmitted to the column buffer 1020 through the load 1030, e.g., through upper memory hierarchies, e.g., a memory external to the compute tile. The data generated by the column 1005 is extracted from the column buffers 1020 through the drain 1040. In some embodiments, data extracted from a column buffer 1020 is sent to upper memory hierarchies, e.g., a memory external to the compute tile, through the drain operation. In some embodiments, the drain operation does not start until all the MAC units 1010 in the column 1005 have finished their MAC operations.

### Example Method of Deep Learning

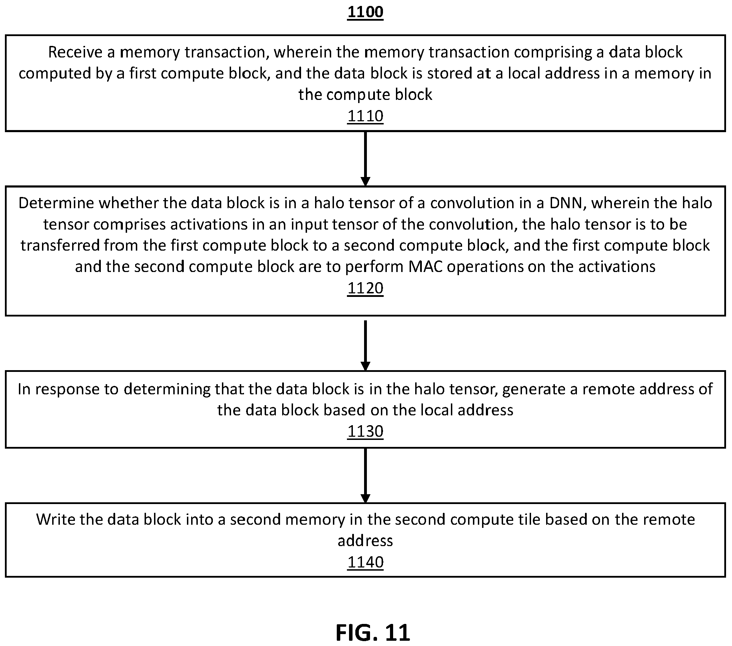

FIG. 11 is a flowchart showing a method 1100 of deep learning, in accordance with various embodiments. The method 1100 may be performed by the halo pipeline 550 in FIG. 5. Although the method 1100 is described with reference to the flowchart illustrated in FIG. 11, many other methods for deep learning may alternatively be used. For example, the order of execution of the steps in FIG. 11 may be changed. As another example, some of the steps may be changed, eliminated, or combined.

The halo pipeline 550 receives 1110 a memory transaction. The memory transaction comprises a data block computed by a first compute block. The data block is stored at a local address in a memory in the first compute block. An example of the compute block is the compute tile 500 in FIG. 5. An example of the memory is the memory 540 in FIG. 5.

The halo pipeline 550 determines 1120 whether the data block is in a halo tensor of a convolution in a DNN. The halo tensor comprises activations in an input tensor of the convolution. The halo tensor is to be transferred from the first compute block to a second compute block. The first compute block and the second compute block are to perform MAC operations on the activations. In some embodiments, the data block is computed by the first compute block for a first convolutional layer in the DNN. The convolution is for a second convolutional layer in the DNN. The second convolutional layer is subsequent to the first convolutional layer in the DNN.

In some embodiments, the memory transaction has metadata indicating a position of the data block in the input tensor. The halo tensor has metadata indicating boundaries of the halo tensor within the input tensor. The halo pipeline 550 may determine whether the data block is in a halo tensor comprising determining whether the position of the data block is inside the boundaries.

In response to determining that the data block is in the halo tensor, the halo pipeline 550 generates 1130 a remote address of the data block based on the local address. In some embodiments, the halo pipeline 550 may generate the remote address by accumulating the local address with an address offset. The address offset may be specified in metadata of the halo tensor. In some embodiments, the halo pipeline 550 may partition the memory transaction into two memory transactions, wherein the data block is written into the second memory through the two memory transactions. For instance, the accumulation of the local address with the address offset or reshaping of memory layout may cause the bytes in the data block cross a word boundary. The halo pipeline 550 may generates two write transactions for the data block so that the data block may be stored in two words.

In some embodiments, the halo pipeline 550 may select an address offset from an activation address offset and a sparsity address offset in the metadata of the halo tensor based on metadata of the memory transaction. The metadata of the memory transaction indicates whether the data block comprises activation data or sparsity data.

In some embodiments, the data block is in a first tensor computed by the first compute block for a hidden layer in the DNN. A second tensor is computed by the second compute block for the hidden layer. The halo pipeline 550 may determine whether a width of the first tensor equals a width of the second tensor. In response to determining that the width of the first tensor does not equal the width of the second tensor, the halo pipeline 550 may determine an address adjustment factor (e.g., an address offset) based on the width of the first tensor and the width of the second tensor. The halo pipeline 550 may generate the remote address further based on the address adjustment factor.

The halo pipeline 550 writes 1140 the data block into a second memory in the second compute block based on the remote address. In some embodiments, the convolution is to be performed by at least the first compute block, the second compute block, and a third compute block. The halo pipeline 550 may write the data block into a third memory in the third compute block based on the remote address. In some embodiments, the halo pipeline 550 may form a data package including bits in the remote address and one or more additional bits. The one or more additional bits may identify the second compute block and the third compute block. The data block is written into the second memory and the third memory based on the data package.

In some embodiments, the first compute block receives an additional halo tensor of the convolution from the second compute block. The first compute block and the second compute block perform MAC operations on activations in the additional halo tensor.

### Example Deep Learning Environment

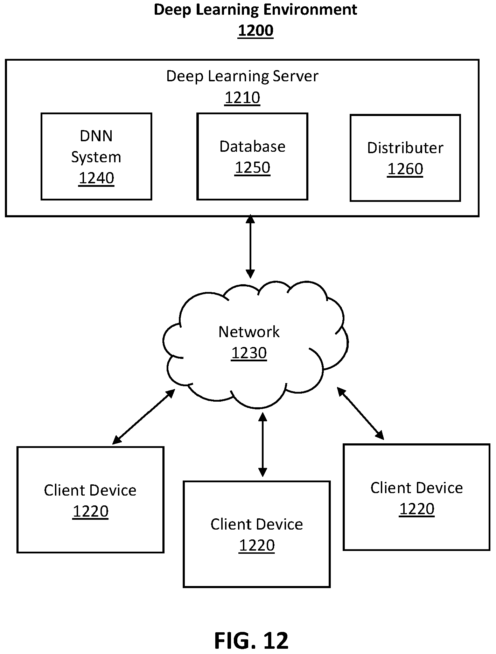

FIG. 12 illustrates a deep learning environment 1200, in accordance with various embodiments. The deep learning environment 1200 includes a deep learning server 1210 and a plurality of client devices 1220 (individually referred to as client device 1220). The deep learning server 1210 is connected to the client devices 1220 through a network 1230. In other embodiments, the deep learning environment 1200 may include fewer, more, or different components.

The deep learning server 1210 trains deep learning models using neural networks. A neural network is structured like the human brain and consists of artificial neurons, also known as nodes. These nodes are stacked next to each other in 3 types of layers: input layer, hidden layer(s), and output layer. Data provides each node with information in the form of inputs. The node multiplies the inputs with random weights, sums them up, and adds a bias. Finally, nonlinear functions, also known as activation functions, are applied to determine which neuron to fire. The deep learning server 1210 can use various types of neural networks, such as DNN, recurrent neural network (RNN), generative adversarial network (GAN), long short-term memory network (LSTMN), and so on. During the process of training the deep learning models, the neural networks use unknown elements in the input distribution to extract features, group objects, and discover useful data patterns. The deep learning models can be used to solve various problems, e.g., making predictions, classifying images, and so on. The deep learning server 1210 may build deep learning models specific to particular types of problems that need to be solved. A deep learning model is trained to receive an input and outputs the solution to the particular problem.

In FIG. 12, the deep learning server 1210 includes a DNN system 1240, a database 1250, and a distributer 1260. The DNN system 1240 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. In some embodiments, the DNN system 1240 trains DNNs through knowledge distillation, e.g., dense-connection based knowledge distillation. The trained DNNs may be used on low memory systems, like mobile phones, IOT edge devices, and so on. An embodiment of the DNN system 1240 is the DNN accelerator 200 described above in conjunction with FIG. 2.

The database 1250 stores data received, used, generated, or otherwise associated with the deep learning server 1210. For example, the database 1250 stores a training dataset that the DNN system 1240 uses to train DNNs. In an embodiment, the training dataset is an image gallery that can be used to train a DNN for classifying images. The training dataset may include data received from the client devices 1220. As another example, the database 1250 stores hyperparameters of the neural networks built by the deep learning server 1210.

The distributer 1260 distributes deep learning models generated by the deep learning server 1210 to the client devices 1220. In some embodiments, the distributer 1260 receives a request for a DNN from a client device 1220 through the network 1230. The request may include a description of a problem that the client device 1220 needs to solve. The request may also include information of the client device 1220, such as information describing available computing resource on the client device. The information describing available computing resource on the client device 1220 can be information indicating network bandwidth, information indicating available memory size, information indicating processing power of the client device 1220, and so on. In an embodiment, the distributer may instruct the DNN system 1240 to generate a DNN in accordance with the request. The DNN system 1240 may generate a DNN based on the information in the request. For instance, the DNN system 1240 can determine the structure of the DNN and/or train the DNN in accordance with the request.

In another embodiment, the distributer 1260 may select the DNN from a group of pre-existing DNNs based on the request. The distributer 1260 may select a DNN for a particular client device 1220 based on the size of the DNN and available resources of the client device 1220. In embodiments where the distributer 1260 determines that the client device 1220 has limited memory or processing power, the distributer 1260 may select a compressed DNN for the client device 1220, as opposed to an uncompressed DNN that has a larger size. The distributer 1260 then transmits the DNN generated or selected for the client device 1220 to the client device 1220.

In some embodiments, the distributer 1260 may receive feedback from the client device 1220. For example, the distributer 1260 receives new training data from the client device 1220 and may send the new training data to the DNN system 1240 for further training the DNN. As another example, the feedback includes an update of the available computing resource on the client device 1220. The distributer 1260 may send a different DNN to the client device 1220 based on the update. For instance, after receiving the feedback indicating that the computing resources of the client device 1220 have been reduced, the distributer 1260 sends a DNN of a smaller size to the client device 1220.

The client devices 1220 receive DNNs from the distributer 1260 and applies the DNNs to perform machine learning tasks, e.g., to solve problems or answer questions. In various embodiments, the client devices 1220 input images into the DNNs and use the output of the DNNs for various applications, e.g., visual reconstruction, augmented reality, robot localization and navigation, medical diagnosis, weather prediction, and so on. A client device 1220 may be one or more computing devices capable of receiving user input as well as transmitting and/or receiving data via the network 1230. In one embodiment, a client device 1220 is a conventional computer system, such as a desktop or a laptop computer. Alternatively, a client device 1220 may be a device having computer functionality, such as a personal digital assistant (PDA), a mobile telephone, a smartphone, an autonomous vehicle, or another suitable device. A client device 1220 is configured to communicate via the network 1230. In one embodiment, a client device 1220 executes an application allowing a user of the client device 1220 to interact with the deep learning server 1210 (e.g., the distributer 1260 of the deep learning server 1210). The client device 1220 may request DNNs or send feedback to the distributer 1260 through the application. For example, a client device 1220 executes a browser application to enable interaction between the client device 1220 and the deep learning server 1210 via the network 1230. In another embodiment, a client device 1220 interacts with the deep learning server 1210 through an application programming interface (API) running on a native operating system of the client device 1220, such as IOS^{®} or ANDROID^{™}.

In an embodiment, a client device 1220 is an integrated computing device that operates as a standalone network-enabled device. For example, the client device 1220 includes display, speakers, microphone, camera, and input device. In another embodiment, a client device 1220 is a computing device for coupling to an external media device such as a television or other external display and/or audio output system. In this embodiment, the client device 1220 may couple to the external media device via a wireless interface or wired interface (e.g., an HDMI (High-Definition Multimedia Interface) cable) and may utilize various functions of the external media device such as its display, speakers, microphone, camera, and input devices. Here, the client device 1220 may be configured to be compatible with a generic external media device that does not have specialized software, firmware, or hardware specifically for interacting with the client device 1220.

The network 1230 supports communications between the deep learning server 1210 and client devices 1220. The network 1230 may comprise any combination of local area and/or wide area networks, using both wired and/or wireless communication systems. In one embodiment, the network 1230 may use standard communications technologies and/or protocols. For example, the network 1230 may include communication links using technologies such as Ethernet, 12010.11, worldwide interoperability for microwave access (WiMAX), 3G, 4G, code division multiple access (CDMA), digital subscriber line (DSL), etc. Examples of networking protocols used for communicating via the network 1230 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 1230 may be represented using any suitable format, such as hypertext markup language (HTML) or extensible markup language (XML). In some embodiments, all or some of the communication links of the network 1230 may be encrypted using any suitable technique or techniques.

### Example DNN System

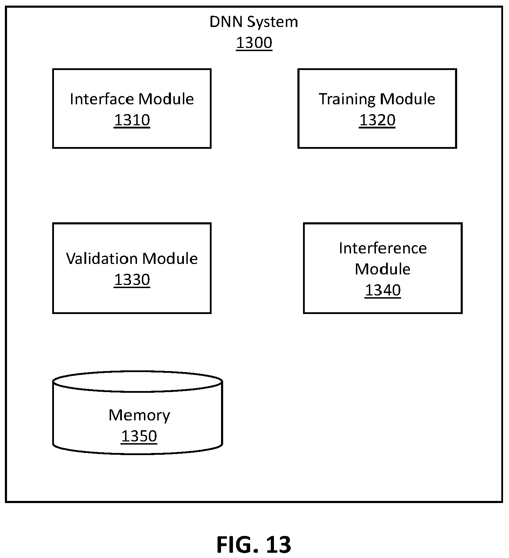

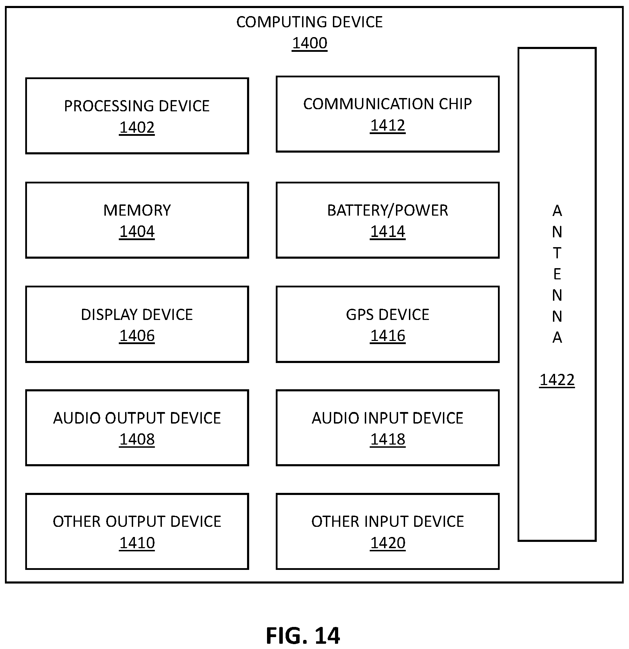

FIG. 13 is a block diagram of an example DNN system 1300, in accordance with various embodiments. The whole DNN system 1300 or a part of the DNN system 1300 may be implemented in the computing device 1400 in FIG. 14. The DNN system 1300 trains DNNs for various tasks, such as image classification, learning relationships between biological cells (e.g., DNA, proteins, etc.), control behaviors for devices (e.g., robots, machines, etc.), and so on. The DNN system 1300 includes an interface module 1310, a training module 1320, a validation module 1330, an inference module 1340, and a memory 1350. In other embodiments, alternative configurations, different or additional components may be included in the DNN system 1300. Further, functionality attributed to a component of the DNN system 1300 may be accomplished by a different component included in the DNN system 1300 or a different system. The DNN system 1300 or a component of the DNN system 1300 (e.g., the training module 1320 or inference module 1340) may include the computing device 1400.

The interface module 1310 facilitates communications of the DNN system 1300 with other systems. For example, the interface module 1310 establishes communications between the DNN system 1300 with an external database to receive data that can be used to train DNNs or input into DNNs to perform tasks. As another example, the interface module 1310 supports the DNN system 1300 to distribute DNNs to other systems, e.g., computing devices configured to apply DNNs to perform tasks.

The training module 1320 trains DNNs by using a training dataset. The training module 1320 forms the training dataset. In an embodiment where the training module 1320 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the validation module 1330 to validate performance of a trained DNN. The portion of the training dataset not including the tuning subset and the validation subset may be used to train the DNN.

The training module 1320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 13, 130, 500, 1300, or even larger.

The training module 1320 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different category by training.

In the process of defining the architecture of the DNN, the training module 1320 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1320 defines the architecture of the DNN, the training module 1320 inputs a training dataset into the DNN. The training dataset includes a plurality of training samples. An example of a training sample includes an object in an image and a ground-truth label of the object. The training module 1320 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1320 uses a cost function to minimize the error.

The training module 1320 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1320 finishes the predetermined number of epochs, the training module 1320 may stop updating the parameters in the DNN. The DNN having the updated parameters is referred to as a trained DNN.

The validation module 1330 verifies accuracy of trained DNNs. In some embodiments, the validation module 1330 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1330 may determine an accuracy score measuring the precision, recall, or a combination of precision and recall of the DNN. The validation module 1330 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1330 may compare the accuracy score with a threshold score. In an example where the validation module 1330 determines that the accuracy score of the augmented model is lower than the threshold score, the validation module 1330 instructs the training module 1320 to re-train the DNN. In one embodiment, the training module 1320 may iteratively re-train the DNN until the occurrence of a stopping condition, such as the accuracy measurement indication that the DNN may be sufficiently accurate, or a number of training rounds having taken place.

The inference module 1340 applies the trained or validated DNN to perform tasks. For instance, the inference module 1340 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the inference module 1340 distributes the DNN to other systems, e.g., computing devices in communication with the DNN system 1300, for the other systems to apply the DNN to perform the tasks.

The memory 1350 stores data received, generated, used, or otherwise associated with the DNN system 1300. For example, the memory 1350 stores the datasets used by the training module 1320 and validation module 1330. The memory 1350 may also store data generated by the training module 1320 and validation module 1330, such as the hyperparameters for training DNNs, internal parameters of trained DNNs (e.g., values of tunable parameters of activation functions, such as Fractional Adaptive Linear Units (FALUs)), etc. In the embodiment of FIG. 13, the memory 1350 is a component of the DNN system 1300. In other embodiments, the memory 1350 may be external to the DNN system 1300 and communicate with the DNN system 1300 through a network.

### Example Computing Device

FIG. 14 is a block diagram of an example computing device 1400, in accordance with various embodiments. In some embodiments, the computing device 1400 can be used as the DNN system 1300 in FIG. 13. A number of components are illustrated in FIG. 14 as included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, but the computing device 1400 may include interface circuitry for coupling to the one or more components. For example, the computing device 1400 may not include a display device 1406, but may include display device interface circuitry (e.g., a connector and driver circuitry) to which a display device 1406 may be coupled. In another set of examples, the computing device 1400 may not include an audio input device 1418 or an audio output device 1408, but may include audio input or output device interface circuitry (e.g., connectors and supporting circuitry) to which an audio input device 1418 or audio output device 1408 may be coupled.

The computing device 1400 may include a processing device 1402 (e.g., one or more processing devices). The processing device 1402 processes electronic data from registers and/or memory to transform that electronic data into other electronic data that may be stored in registers and/or memory. The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1404 may include memory that shares a die with the processing device 1402. In some embodiments, the memory 1404 includes one or more non-transitory computer-readable media storing instructions executable to perform operations for deep learning, e.g., the method 1100 described above in conjunction with FIG. 11 or some operations performed by the compute tile 500 described above in conjunction with FIG. 5 (e.g., operations performed by the halo pipeline 550). The instructions stored in the one or more non-transitory computer-readable media may be executed by the processing device 2402.

In some embodiments, the computing device 1400 may include a communication chip 1412 (e.g., one or more communication chips). For example, the communication chip 1412 may be configured for managing wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1412 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1412 may operate in accordance with other wireless protocols in other embodiments. The computing device 1400 may include an antenna 1422 to facilitate wireless communications and/or to receive other wireless communications (such as AM or FM radio transmissions).

In some embodiments, the communication chip 1412 may manage wired communications, such as electrical, optical, or any other suitable communication protocols (e.g., the Ethernet). As noted above, the communication chip 1412 may include multiple communication chips. For instance, a first communication chip 1412 may be dedicated to shorter-range wireless communications such as Wi-Fi or Bluetooth, and a second communication chip 1412 may be dedicated to longer-range wireless communications such as global positioning system (GPS), EDGE, GPRS, CDMA, WiMAX, LTE, EV-DO, or others. In some embodiments, a first communication chip 1412 may be dedicated to wireless communications, and a second communication chip 1412 may be dedicated to wired communications.

The computing device 1400 may include battery/power circuitry 1414. The battery/power circuitry 1414 may include one or more energy storage devices (e.g., batteries or capacitors) and/or circuitry for coupling components of the computing device 1400 to an energy source separate from the computing device 1400 (e.g., AC line power).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include another output device 1410 (or corresponding interface circuitry, as discussed above). Examples of the other output device 1410 may include an audio codec, a video codec, a printer, a wired or wireless transmitter for providing information to other devices, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile internet device, a music player, a tablet computer, a laptop computer, a netbook computer, an ultra book computer, a PDA, an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1400 may be any other electronic device that processes data.

### Select Examples

The following paragraphs provide various examples of the embodiments disclosed herein.

Example 1 provides a method for deep learning, including receiving a memory transaction, where the memory transaction including a data block computed by a first compute block, and the data block is stored at a local address in a memory in the first compute block; determining whether the data block is in a halo tensor of a convolution in a DNN, where the halo tensor includes activations in an input tensor of the convolution, the halo tensor is to be transferred from the first compute block to a second compute block, and the first compute block and the second compute block are to perform MAC operations on the activations; in response to determining that the data block is in the halo tensor, generating a remote address of the data block based on the local address; and writing the data block into a second memory in the second compute block based on the remote address.

Example 2 provides the method of example 1, where the convolution is to be performed by at least the first compute block, the second compute block, and a third compute block, and the method further includes writing the data block into a third memory in the third compute block based on the remote address.

Example 3 provides the method of example 2, further including forming a data package including bits in the remote address and one or more additional bits, where the one or more additional bits identify the second compute block and the third compute block, and the data block is written into the second memory and the third memory based on the data package.

Example 4 provides the method of any of the preceding examples, where the memory transaction has metadata indicating a position of the data block in the input tensor, the halo tensor has metadata indicating boundaries of the halo tensor within the input tensor, and determining whether the data block is in a halo tensor including determining whether the position of the data block is inside the boundaries.

Example 5 provides the method of any of the preceding examples, where generating the remote address of the data block based on the local address includes accumulating the local address with an address offset, where the address offset is specified in metadata of the halo tensor.

Example 6 provides the method of example 5, where generating the remote address of the data block based on the local address further includes selecting an address offset from an activation address offset and a sparsity address offset in the metadata of the halo tensor based on metadata of the memory transaction, where the metadata of the memory transaction indicates whether the data block includes activation data or sparsity data.

Example 7 provides the method of example 5 or 6, further including partitioning the memory transaction into two memory transactions, where the data block is written into the second memory through the two memory transactions.

Example 8 provides the method of any of the preceding examples, where the data block is in a first tensor computed by the first compute block for a hidden layer in the DNN, a second tensor is computed by the second compute block for the hidden layer, and generating the remote address of the data block based on the local address includes determining whether a width of the first tensor equals a width of the second tensor, in response to determining that the width of the first tensor does not equal the width of the second tensor, determining an address adjustment factor based on the width of the first tensor and the width of the second tensor, and generating the remote address further based on the address adjustment factor.

Example 9 provides the method of any of the preceding examples, where the first compute block receives an additional halo tensor of the convolution from the second compute block, and the first compute block and the second compute block perform MAC operations on activations in the additional halo tensor.

Example 10 provides the method of any of the preceding examples, where the data block is computed by the first compute block for a first convolutional layer in the DNN, the convolution is for a second convolutional layer in the DNN, and the second convolutional layer is subsequent to the first convolutional layer in the DNN.

Example 11 provides one or more non-transitory computer-readable media storing instructions executable to perform operations for deep learning, the operations including receiving a memory transaction, where the memory transaction including a data block computed by a first compute block, and the data block is stored at a local address in a memory in the first compute block; determining whether the data block is in a halo tensor of a convolution in a DNN, where the halo tensor includes activations in an input tensor of the convolution, the halo tensor is to be transferred from the first compute block to a second compute block, and the first compute block and the second compute block are to perform multiply-accumulate (MAC) operations on the activations; in response to determining that the data block is in the halo tensor, generating a remote address of the data block based on the local address; and writing the data block into a second memory in the second compute block based on the remote address.

Example 12 provides the one or more non-transitory computer-readable media of example 11, where the convolution is to be performed by at least the first compute block, the second compute block, and a third compute block, and the operations further include writing the data block into a third memory in the third compute block based on the remote address.

Example 13 provides the one or more non-transitory computer-readable media of example 12, where the operations further include forming a data package including bits in the remote address and one or more additional bits, where the one or more additional bits identify the second compute block and the third compute block, and the data block is written into the second memory and the third memory based on the data package.

Example 14 provides the one or more non-transitory computer-readable media of any one of examples 11-13, where the memory transaction has metadata indicating a position of the data block in the input tensor, the halo tensor has metadata indicating boundaries of the halo tensor within the input tensor, and determining whether the data block is in a halo tensor including determining whether the position of the data block is inside the boundaries.

Example 15 provides the one or more non-transitory computer-readable media of any one of examples 11-14, where generating the remote address of the data block based on the local address includes accumulating the local address with an address offset, where the address offset is specified in metadata of the halo tensor.

Example 16 provides the one or more non-transitory computer-readable media of example 15, where generating the remote address of the data block based on the local address further includes selecting an address offset from an activation address offset and a sparsity address offset in the metadata of the halo tensor based on metadata of the memory transaction, where the metadata of the memory transaction indicates whether the data block includes activation data or sparsity data.

Example 17 provides the one or more non-transitory computer-readable media of example 15 or 16, where the operations further include partitioning the memory transaction into two memory transactions, where the data block is written into the second memory through the two memory transactions.

Example 18 provides the one or more non-transitory computer-readable media of any one of examples 11-17, where the data block is in a first tensor computed by the first compute block for a hidden layer in the DNN, a second tensor is computed by the second compute block for the hidden layer, and generating the remote address of the data block based on the local address includes determining whether a width of the first tensor equals a width of the second tensor, in response to determining that the width of the first tensor does not equal the width of the second tensor, determining an address adjustment factor based on the width of the first tensor and the width of the second tensor, and generating the remote address further based on the address adjustment factor.

Example 19 provides the one or more non-transitory computer-readable media of any one of examples 11-18, where the first compute block receives an additional halo tensor of the convolution from the second compute block, and the first compute block and the second compute block perform MAC operations on activations in the additional halo tensor.

Example 20 provides the one or more non-transitory computer-readable media of any one of examples 11-19, where the data block is computed by the first compute block for a first convolutional layer in the DNN, the convolution is for a second convolutional layer in the DNN, and the second convolutional layer is subsequent to the first convolutional layer in the DNN.

Example 21 provides a DNN accelerator, the DNN accelerator including a first compute tile, including a first array of MAC units configured to perform MAC operations in a convolution, and a first memory; and a second compute tile, including a second array of MAC units configured to perform other MAC operations in a convolution, a second memory, and a halo pipeline that is configured to receive a memory transaction, where the memory transaction including activations in an input tensor of the convolution, the activations are computed by the second array of MAC units, and the activations are stored at a local address in the second memory, determine whether the activations are in a halo tensor of the convolution, in response to determining that the activations are in the halo tensor, generate a remote address of the memory transaction based on the local address, and write the activations into the first memory based on the remote address, where the activations are to be used by the first array of MAC units for some of the MAC operations.

Example 22 provides the DNN accelerator of example 21, where the halo pipeline is configured to forming a data package including bits in the remote address and one or more additional bits, where the one or more additional bits identify the first compute tile and a third compute tile in the DNN accelerators, and the activations are written into a third memory in the third compute tile based on the data package.

Example 23 provides the DNN accelerator of example 21 or 22, where the memory transaction has metadata indicating positions of the activations in the input tensor, the halo tensor has metadata indicating boundaries of the halo tensor within the input tensor, and the halo pipeline is configured to determine whether the activations are in the halo tensor by determining whether the positions of the activations are inside the boundaries.

Example 24 provides the DNN accelerator of any one of examples 21-23, where the halo pipeline is configured to generate the remote address by accumulating the local address with an address offset, where the address offset is specified in metadata of the halo tensor.

Example 25 provides the DNN accelerator of any one of examples 21-24, where the halo pipeline is further configured to partition the memory transaction into two memory transactions, where the activations are written into the first memory through the two memory transactions.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method for deep learning, comprising:
receiving a memory transaction, wherein the memory transaction comprising a data block computed by a first compute block, and the data block is stored at a local address in a memory in the first compute block;
determining whether the data block is in a halo tensor of a convolution in a deep neural network (DNN), wherein the halo tensor comprises activations in an input tensor of the convolution, the halo tensor is to be transferred from the first compute block to a second compute block, and the first compute block and the second compute block are to perform multiply-accumulate (MAC) operations on the activations;
in response to determining that the data block is in the halo tensor, generating a remote address of the data block based on the local address; and
writing the data block into a second memory in the second compute block based on the remote address.

2. The method of claim 1, wherein the convolution is to be performed by at least the first compute block, the second compute block, and a third compute block, and the method further comprises:
writing the data block into a third memory in the third compute block based on the remote address.

3. The method of claim 2, further comprising:
forming a data package including bits in the remote address and one or more additional bits, wherein the one or more additional bits identify the second compute block and the third compute block, and the data block is written into the second memory and the third memory based on the data package.

4. The method of any of the preceding claims, wherein:
the memory transaction has metadata indicating a position of the data block in the input tensor,
the halo tensor has metadata indicating boundaries of the halo tensor within the input tensor, and
determining whether the data block is in a halo tensor comprising determining whether the position of the data block is inside the boundaries.

5. The method of any of the preceding claims, wherein generating the remote address of the data block based on the local address comprises:
accumulating the local address with an address offset, wherein the address offset is specified in metadata of the halo tensor.

6. The method of claim 5, wherein:
generating the remote address of the data block based on the local address further comprises selecting an address offset from an activation address offset and a sparsity address offset in the metadata of the halo tensor based on metadata of the memory transaction, wherein the metadata of the memory transaction indicates whether the data block comprises activation data or sparsity data; or
the method further comprises partitioning the memory transaction into two memory transactions, wherein the data block is written into the second memory through the two memory transactions.

7. The method of any of the preceding claims , wherein:
the data block is in a first tensor computed by the first compute block for a hidden layer in the DNN,
a second tensor is computed by the second compute block for the hidden layer, and
generating the remote address of the data block based on the local address comprises:
determining whether a width of the first tensor equals a width of the second tensor,
in response to determining that the width of the first tensor does not equal the width of the second tensor, determining an address adjustment factor based on the width of the first tensor and the width of the second tensor, and
generating the remote address further based on the address adjustment factor.

8. The method of any of the preceding claims , wherein the first compute block receives an additional halo tensor of the convolution from the second compute block, and the first compute block and the second compute block perform MAC operations on activations in the additional halo tensor.

9. The method of any of the preceding claims , wherein the data block is computed by the first compute block for a first convolutional layer in the DNN, the convolution is for a second convolutional layer in the DNN, and the second convolutional layer is subsequent to the first convolutional layer in the DNN.

10. One or more non-transitory computer-readable media storing instructions executable to perform any of the preceding claims.

11. A deep neural network (DNN) accelerator, the DNN accelerator comprising:
a first compute tile, comprising:
a first array of multiple-accumulate (MAC) units configured to perform MAC operations in a convolution, and
a first memory; and
a second compute tile, comprising:
a second array of MAC units configured to perform other MAC operations in a convolution,
a second memory, and
a halo pipeline that is configured to:
receive a memory transaction, wherein the memory transaction comprising activations in an input tensor of the convolution, the activations are computed by the second array of MAC units, and the activations are stored at a local address in the second memory,
determine whether the activations are in a halo tensor of the convolution,
in response to determining that the activations are in the halo tensor, generate a remote address of the memory transaction based on the local address, and
write the activations into the first memory based on the remote address, wherein the activations are to be used by the first array of MAC units for some of the MAC operations.

12. The DNN accelerator of claim 11, wherein the halo pipeline is configured to:
forming a data package including bits in the remote address and one or more additional bits,
wherein the one or more additional bits identify the first compute tile and a third compute tile in the DNN accelerators, and the activations are written into a third memory in the third compute tile based on the data package.

13. The DNN accelerator of claim 11 or 12, wherein:
the memory transaction has metadata indicating positions of the activations in the input tensor,
the halo tensor has metadata indicating boundaries of the halo tensor within the input tensor, and
the halo pipeline is configured to determine whether the activations are in the halo tensor by determining whether the positions of the activations are inside the boundaries.

14. The DNN accelerator of any one of claims 11-13, wherein the halo pipeline is configured to generate the remote address by accumulating the local address with an address offset, wherein the address offset is specified in metadata of the halo tensor.

15. The DNN accelerator of any one of claims 11-14, wherein the halo pipeline is further configured to:
partition the memory transaction into two memory transactions, wherein the activations are written into the first memory through the two memory transactions.
